# EUROPÄISCHE PATENTSCHRIFT

(11) **EP 1 570 724 B1**
(45) Veröffentlichungstag und Bekanntmachung des Hinweises auf die Patenterteilung: **26.09.2007**
(21) Anmeldenummer: 05101397.7
(22) Anmeldetag: 24.02.2005
(51) Int. Cl.: A01D 69/00, A01F 29/14, A01D 41/127

(54) **Antriebsanordnung zum Antrieb eines Erntevorsatzes einer Erntemaschine**
Driving assembly to drive a harvester head of a harvester
Disposition d'actionnement pour actionner la tête de récolte d'une machine de récolte

(30) Priorität: 02.03.2004 US 791328
(43) Veröffentlichungstag der Anmeldung: 07.09.2005
(73) Patentinhaber: DEERE & COMPANY, Moline, Illinois 61265-8098 (US)
(72) Erfinder: Teijido, Joseph Albert, 61244 East Moline, IL 61244 (US); Wigand, Jeffrey Lee, Moline, IL 61265 (US); Anderson, Daniel Ray, Bettendorf, IL 52722 (US); Hawkins, Robert Wayne, Rapids City, IL 61278 (US); Stettler, Werner Jr, Cedar Falls, IA 50613 (US); Pierce, Johann Hwang, Dewitt, IA 52742 (US); Weis, Helmut, 66506 Massweiler (DE); Kempf, Bernd, 66484 Althornbach (DE)
(74) Vertreter: Holst, Sönke

(56) Entgegenhaltungen:
- US-A1- 2003 109 292
- US-B1- 6 247 296

## Beschreibung

Die Erfindung betrifft eine Antriebsanordnung zum Antrieb eines Erntevorsatzes einer Erntemaschine, mit einem ersten Motor mit einer in Drehung versetzbaren ersten Ausgangswelle, die mit einer drehbaren ersten Eingangswelle verbindbar ist, einem zweiten, mit veränderbarer Geschwindigkeit vorwärts und rückwärts antreibbaren Motor, der mit einer zweiten Ausgangswelle versehen ist, die mit einer zweiten Eingangswelle verbunden ist und einer Erntevorsatzausgangswelle zum Antrieb eines Erntevorsatzes, einem Planetengetriebe, das als Elemente ein Sonnenrad, ein Ringrad und einen Planetenradzusammenbau umfasst, der Planetenräder aufweist, die mit dem Sonnenrad und dem Ringrad im Eingriff stehen, wobei die erste Eingangswelle mit einem der Elemente des Planetengetriebes verbunden ist, die zweite Eingangswelle mit einem anderen der Elemente des Planetengetriebes verbunden ist, und die Erntevorsatzausgangswelle mit dem verbleibenden Element des Planetengetriebes verbunden ist.

Mähdrescher sind große landwirtschaftliche Maschinen, die beim Kornanbau zur Ernte unterschiedlicher Pflanzen von einem Feld verwendet werden. Mähdrescher werden typischerweise durch einen an Bord befindlichen Motor angetrieben, manche werden aber durch einen Traktor gezogen und mit Leistung versorgt. Wenn sich der Mähdrescher bei der Ernte über ein Feld bewegt, wird reifes Erntegut durch einen Erntevorsatz an der Vorderseite des Mähdreschers abgeschnitten. Das Erntegut wird dann in Dresch- und Trennzusammenbauten innerhalb des Mähdreschers verbracht, wo Korn vom verbleibenden Pflanzenmaterial getrennt wird. Das erhaltene saubere Korn wird in einem auf dem Mähdrescher angeordneten Korntank gespeichert. Das saubere Korn kann dann durch einen Schneckenförderer vom Korntank auf einen Lastwagen, Kornwagen oder in einen anderen Aufnahmebehälter transportiert werden.

Erntevorsätze können in vielfältigen Anordnungen konfiguriert sein, um unterschiedliche Arten von Erntegut zu ernten. Beispiele sind die zur Ernte von Mais (Maispflücker) und die zur Ernte von Korn (Schneidwerk) konfigurierten Erntevorsätze. Gewöhnlich werden die meisten Funktionen des Erntevorsatzes mechanisch angetrieben und erhalten ihre Antriebsleistung direkt über ein Getriebe vom Motor. Das Getriebe umfasst typischerweise einen Riemenantrieb mit fester oder variabler Übersetzung in Kombination mit einer weiteren Untersetzungsstufe, wie ein Planetengetriebe. Zusätzlich können hydrostatische Motoren verwendet werden, um weitere Funktionselemente des Erntevorsatzes anzutreiben, wie eine Haspel am Schneidwerk.

Unter normalen Erntebedingungen wird der Motor vom Bediener in der Regel auf eine feste Betriebsgeschwindigkeit eingestellt, wobei die mechanisch angetriebenen Funktionselemente des Erntevorsatzes ebenfalls bezüglich der Motorgeschwindigkeit mit konstanter, festgelegter Geschwindigkeit angetrieben werden. Im Unterschied dazu kann die Vortriebsgeschwindigkeit des Mähdreschers unter Kontrolle des Bedieners mittels einer hydrostatischen Übersetzung verändert werden, unabhängig von der Geschwindigkeit des Motors. Die hydrostatisch betriebenen Funktionen des Erntevorsatzes können auch unabhängig voneinander unter Kontrolle des Bedieners verändert werden; sie sind häufig eingerichtet, mit gegenüber der Vortriebsgeschwindigkeit variablen Geschwindigkeiten zu arbeiten, oder mit zur Betriebsgeschwindigkeit mechanisch angetriebener Funktionselemente des Erntevorsatzes proportionalen Geschwindigkeiten betrieben zu werden.

Bei einem Riemenantrieb mit festem Übersetzungsverhältnis bewirkt die bei schweren Erntebedingungen ansteigende Belastung des Erntevorsatzes einen Anstieg der Leistung des Motors, um die Betriebsgeschwindigkeit des Motors konstant zu halten. Falls die Belastung des Erntevorsatzes übermäßig wird und die Leistungsfähigkeit des Motors bei der festen Betriebsgeschwindigkeit überschritten wird, wird der Motor sich verlangsamen und möglicherweise stehen bleiben, wenn der Bediener des Mähdreschers die Vortriebsgeschwindigkeit nicht vermindert. Um dieses Problem zu lösen, kann ein Riemenantrieb mit variabler Geschwindigkeit in Kombination mit Belastungssensoren verwendet werden, die veranlassen, dass das Übersetzungsverhältnis des Riemenantriebs unter schweren Erntebedingungen geändert wird, was dazu führt, dass der Erntevorsatz sich verlangsamt, anstelle übermäßig viel Leistung vom Motor abzufordern. Die verminderte Geschwindigkeit des Erntevorsatzes wird den Bediener des Mähdreschers dennoch weiterhin veranlassen, die Vortriebsgeschwindigkeit zu vermindern, was eine verminderte Produktivität bei der Ernte zur Folge hat.

Eine Antriebsanordnung eingangs genannter Art ist in der DE 198 12 500 A offenbart. Die Vorpresswalzen eines Feldhäckslers oder der Schrägförderer eines Mähdreschers und der zugehörige Erntevorsatz werden über ein Planetengetriebe angetrieben, dessen Elemente mit dem Verbrennungsmotor der Erntemaschine, einem Hydraulikmotor mit veränderbarer Drehzahl und Drehrichtung bzw. dem Erntevorsatz verbunden sind, um die Einzugsgeschwindigkeit zu variieren. Der Hydraulikmotor muss auch bei der Einzugsgeschwindigkeit ein Drehmoment bereitstellen, bei der er sich nicht dreht, so dass er permanent unter Belastung steht, was seinen Verschleiß vergrößert. Eine von der Anmelderin hergestellte Ausführungsform an einem Feldhäcksler ist in Profi Nr. 9 (2002), Seite 34 bis 37 beschrieben. Eine andere Antriebsanordnung zum Antrieb eines Erntevorsatzes eines Mähdreschers mit einem Planetengetriebe wird in der US 6 666 007 B beschrieben.

Das der Erfindung zu Grunde liegende Problem wird darin gesehen, einen verbesserten Antrieb für einen Erntevorsatz bereitzustellen.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Die vorliegende Erfindung bezieht sich auf ein Getriebe mit beliebig fein einstellbarem Übersetzungsverhältnis zum Antrieb des Erntevorsatzes für eine Erntemaschine, insbesondere einen Mähdrescher. Das Getriebe ist eingerichtet, Leistung vom ersten Motor (dem Hauptmotor) auf den Erntevorsatz zu übertragen. Das Getriebe umfasst einen zweiten Motor, der mit einer zweiten Ausgangswelle versehen ist, eine erste Eingangswelle, die vorzugsweise über eine elektrisch betätigte Kupplung und einen Riemenantrieb mit festem Übersetzungsverhältnis mit dem ersten Motor verbunden ist, und eine Erntevorsatzausgangswelle, die mit den angetriebenen Elementen des Erntevorsatzes in Antriebsverbindung steht. Ein Planetengetriebe verbindet die erste Eingangswelle, die zweite Eingangswelle und die Erntevorsatzausgangswelle. Das Planetengetriebe umfasst ein Sonnenrad, ein Ringrad und einen Planetenradzusammenbau mit Planetenrädern, die sowohl mit dem Ringrad als auch mit dem Sonnenrad im Eingriff stehen. Die Funktion des Getriebes wird durch einen Steuerschaltkreis gesteuert, der eingerichtet ist, von einem Bediener Anweisungen zu empfangen, die gewünschten Betriebsarten entsprechen.

Das Getriebe umfasst eine zweite Bremse zum Anhalten der zweiten Eingangswelle. Dadurch besteht die Möglichkeit, das Getriebe derart zu dimensionieren, dass der zweite Motor bei normalem Erntebetrieb angehalten und durch die zweite Bremse drehmomentfrei gestellt werden kann. Außerdem kann die zweite Bremse zum schnellen Anhalten des Erntevorsatzes dienen.

Im Betrieb kann der Bediener die Betriebsgeschwindigkeit des Erntevorsatzes vergrößern oder verkleinern, wie gewünscht. Dabei wird die Geschwindigkeit des zweiten Motors variiert. Dadurch kann er die Arbeitsgeschwindigkeit des Erntevorsatzes in schweren Arbeitsbedingungen vergrößern, um die feste Betriebsgeschwindigkeit des ersten Motors aufrecht zu erhalten. Alternativ kann eine Regelung mit Geschwindigkeitssensoren oder Durchsatz- oder Belastungssensoren verwendet werden, um die Arbeitsgeschwindigkeit des Erntevorsatzes bei schweren Arbeitsbedingungen anzuheben, um die feste Betriebsgeschwindigkeit des ersten Motors aufrecht zu erhalten.

Andere Funktionen des Getriebes umfassen die Fähigkeit zu einem schnellen Abstoppen des Erntevorsatzes, indem die erste Eingangswelle und die zweite Eingangswelle durch die zugeordneten Bremsen angehalten und damit auch die Erntevorsatzausgangswelle gestoppt werden, wie auch einen langsamen Vorwärts- und Rückwärtsbetrieb des Erntevorsatzes, in dem die erste Eingangswelle durch die Kupplung vom Motor getrennt und durch die erste Bremse angehalten wird, während die Bewegung nur durch den zweiten Motor bereitgestellt wird.

Bei einer bevorzugten Ausführungsform der Erfindung ist das Sonnenrad mit der ersten Eingangswelle verbunden, das Ringrad mit der zweiten Eingangswelle und der Planetenradträger mit der Erntevorsatzantriebswelle.

Das erfindungsgemäße Getriebe kann an beliebigen Arten von Erntemaschinen und Erntevorsätzen verwendet werden, insbesondere Mähdreschern und Feldhäckslern mit geeigneten Erntevorsätzen beliebiger Art.

In den Zeichnungen ist ein nachfolgend näher beschriebenes Ausführungsbeispiel der Erfindung dargestellt. Es zeigt:
- Fig. 1: eine seitliche Ansicht eines landwirtschaftlichen Mähdreschers mit einem Maispflücker,
- Fig. 2: eine schematische Ansicht eines stufenlos verstellbaren Getriebes während des Antreibens eines Maispflückers, dargestellt in ausgerückter Stellung,
- Fig. 3: eine schematische Ansicht des stufenlos verstellbaren Getriebes während des Antreibens eines Maispflückers, dargestellt in normalem Betrieb mit fester Geschwindigkeit,
- Fig. 4: eine schematische Ansicht des stufenlos verstellbaren Getriebes während des Antreibens eines Maispflückers, dargestellt im Betrieb mit verstellbarer, hoher Geschwindigkeit,
- Fig. 5: eine schematische Ansicht des stufenlos verstellbaren Getriebes während des Antreibens eines Maispflückers, dargestellt beim schnellen Anhalten des Maispflückers,
- Fig. 6: eine schematische Ansicht des stufenlos verstellbaren Getriebes während des Antreibens eines Maispflückers, dargestellt im Betrieb mit verstellbarer, langsamer Geschwindigkeit,
- Fig. 7: eine schematische Ansicht des stufenlos verstellbaren Getriebes während des Antreibens eines Schneidwerks, dargestellt in ausgerückter Stellung,
- Fig. 8: eine schematische Ansicht des stufenlos verstellbaren Getriebes während des Antreibens eines Schneidwerks, dargestellt in normalem Betrieb mit fester Geschwindigkeit,
- Fig. 9: eine schematische Ansicht des stufenlos verstellbaren Getriebes während des Antreibens eines Schneidwerks, dargestellt im Betrieb mit verstellbarer, hoher Geschwindigkeit,
- Fig. 10: eine schematische Ansicht des stufenlos verstellbaren Getriebes während des Antreibens eines Schneidwerks, dargestellt beim schnellen Anhalten des Maispflückers,
- Fig. 11: eine schematische Ansicht des stufenlos verstellbaren Getriebes während des Antreibens eines Maispflückers, dargestellt im Betrieb mit verstellbarer, langsamer Geschwindigkeit.

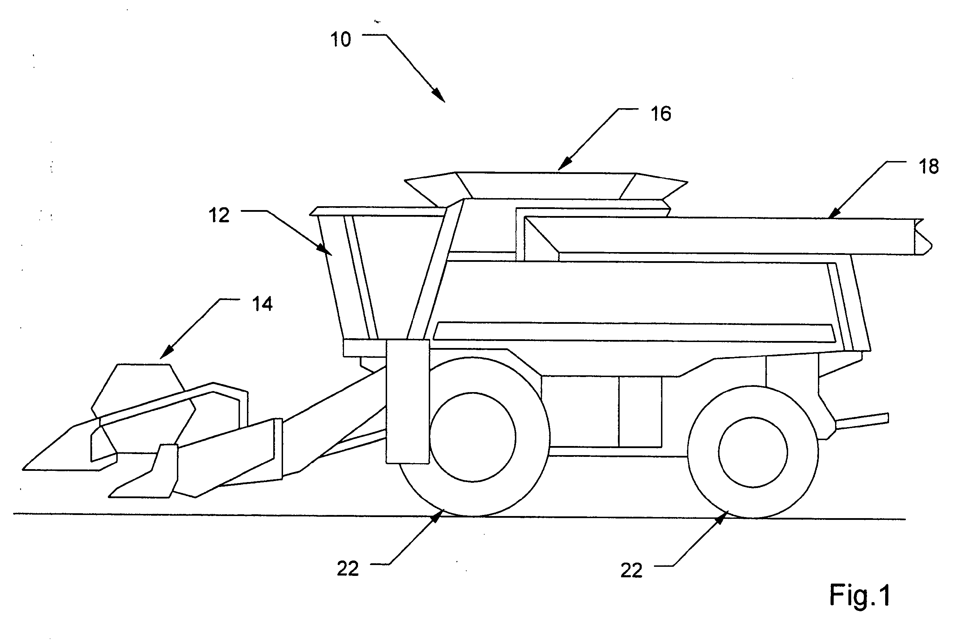

Die Figur 1 zeigt einen selbstfahrenden Mähdrescher 10, der üblicherweise beim Getreideanbau zur Ernte einer Vielzahl unterschiedlicher Erntegüter von einem Feld verwendet wird. Ein Bediener kontrolliert die Funktionen des Mähdreschers 10 von einem Bedienerarbeitsplatz 12. Wenn sich der Mähdrescher 10 während des Erntebetriebs über ein Feld bewegt, wird reifes Erntegut durch einen Erntevorsatz 14 an der Vorderseite des Mähdreschers 10 vom Feld abgeschnitten. Das Erntegut wird dann in Dresch- und Trennzusammenbauten innerhalb des Mähdreschers 10 überführt, wo Korn vom Erntegut getrennt wird. Das erhaltene saubere Korn wird in einem am Mähdrescher 10 angeordneten Korntank 16 gespeichert. Das saubere Korn kann dann durch einen Entladeschneckenförderer 18 vom Korntank 16 auf einen Lastwagen, Kornwagen oder in ein anderes Empfängerbehältnis transportiert werden. Der Mähdrescher 10 wird typischerweise von einem Motor 20 angetrieben, kann aber die Leistung auch aus anderen Quellen beziehen, wie Batterien oder Brennstoffzellen in Kombination mit elektrischen Motoren. Ein hydrostatisches Getriebe mit variabler Geschwindigkeit wird typischerweise verwendet, um im Eingriff mit dem Boden befindliche Räder 22 anzutreiben, die den Mähdrescher 10 abstützen und vorantreiben. Eine elektrisch betätigbare Kupplung 24 wird verwendet, um im Betrieb eine Hauptausgangswelle 26 des Motors 20 mit einem Getriebe 30 zu verbinden, welches Leistung auf den Erntevorsatz 14 überträgt.

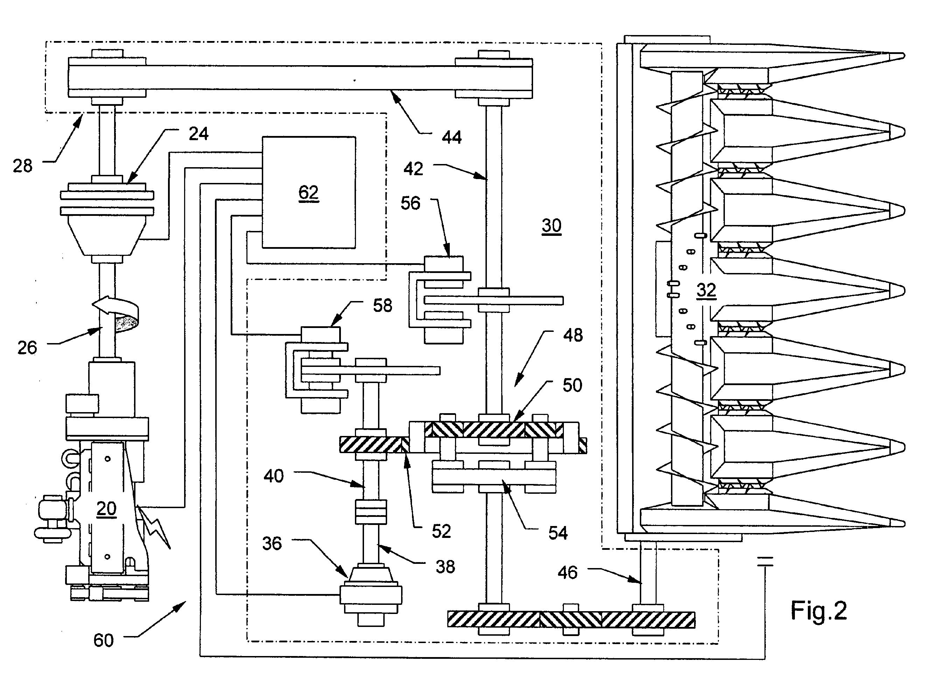

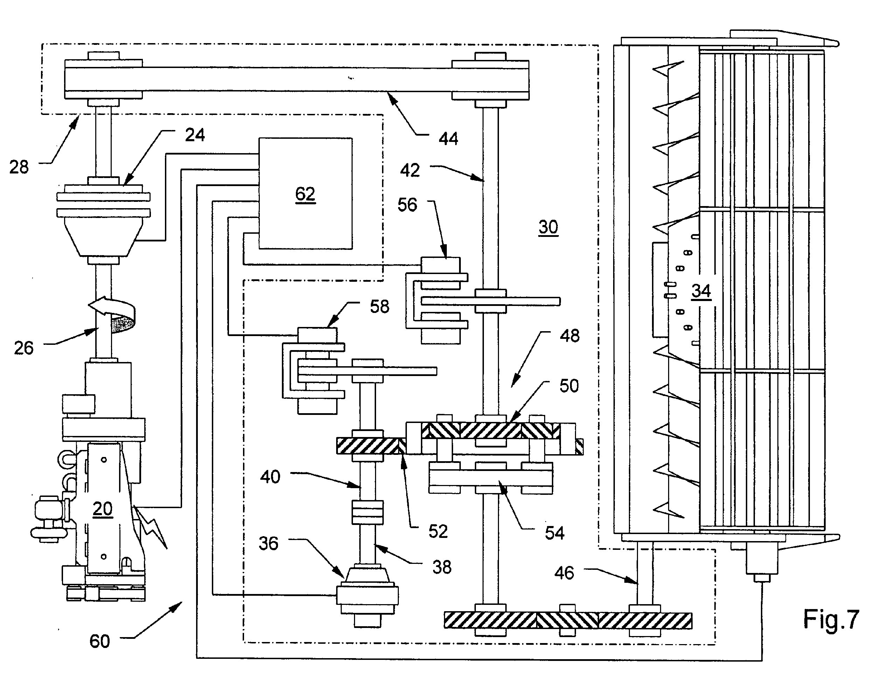

Die Figuren 2 und 7 zeigen ein Getriebe 30 mit unendlich fein verstellbarem Übersetzungsverhältnis (IVT, engl. infinitely variable speed transmission), das sich zwischen dem Motor 20 und dem Erntevorsatz 14 erstreckt. Die Figur 2 stellt das Getriebe 30 mit einem Maisgebiss 32 dar, und die Figur 7 zeigt das selbe Getriebe 30 mit einem Schneidwerk 34. Das Getriebe 30 umfasst einen zweiten Motor 36 mit einer zweiten Ausgangswelle 38, eine zweite Eingangswelle 40, die mit der zweiten Ausgangswelle 38 verbunden ist, eine erste Eingangswelle 42, die über einen Riemenantrieb 44 mit festem Übersetzungsverhältnis mit der elektrisch betätigbaren Kupplung 24 verbunden ist, und eine Erntevorsatzausgangswelle 46, die mit dem Erntevorsatz 14 verbunden ist. Ein Planetengetriebe 48 verbindet die erste Eingangswelle 42, die zweite Eingangswelle 40 und die Erntevorsatzausgangswelle 46 untereinander. Das Planetengetriebe 48 umfasst ein mit der ersten Eingangswelle 42 verbundenes Sonnenrad 50 und ein Ringrad 52, das mit der zweiten Eingangswelle 40 verbunden ist. Das Planetengetriebe 48 umfasst weiterhin einen Planetenradzusammenbau 54, dessen Planetenräder sowohl mit dem Sonnenrad 50 als auch mit dem Ringrad 52 im Eingriff stehen, und der mit der Erntevorsatzausgangswelle 46 verbunden ist. Das Getriebe 30 umfasst weiterhin eine im Normalbetrieb (und im Ruhezustand) ausgerückte erste Bremse 56, die mit der ersten Eingangswelle 42 gekoppelt ist, und eine im Normalbetrieb (und im Ruhezustand) geschlossene zweite Bremse 58, die mit der zweiten Eingangswelle 40 gekoppelt ist. Der zweite Motor 36 ist in der dargestellten Ausführungsform ein hydrostatischer Motor, es können aber auch andere Motortypen verwendet werden, wie Elektromotore mit einstellbarer Geschwindigkeit.

Der Betrieb des Getriebes 30 wird durch einen Steuerschaltkreis 60 gesteuert, der geeignet ist, vom Bediener Anweisungen zu empfangen, die der gewünschten Betriebsart des Erntevorsatzes 14 entsprechen. Der Steuerschaltkreis 60 ist eingerichtet, mit der elektrisch betätigbaren Kupplung 24, dem zweiten Motor 36, der ersten Bremse 56 und der zweiten Bremse 58 zu kommunizieren. Der Steuerschaltkreis 60 ist eingerichtet, die elektrisch betätigbare Kupplung 24 anzuweisen, die erste Ausgangswelle 26 mit der ersten Eingangswelle 42 zu verbinden und den zweiten Motor 36 anzuweisen, variable Drehgeschwindigkeiten der zweiten Ausgangswelle 38 in Vorwärts- und Rückwärtsrichtung anzunehmen und aufrecht zu erhalten. Der Steuerschaltkreis 60 ist weiterhin angepasst, die erste Bremse 56 zu veranlassen, die Drehung der ersten Eingangswelle 42 anzuhalten, und die zweite Bremse 58 zu veranlassen, die zweite Eingangswelle 40 zur Drehung frei zu geben. Der Steuerschaltkreis 60 kann in einer Anzahl von Konfigurationen angeordnet sein, die für angetriebene Maschinen typisch sind, ist hier aber als elektronischer Controller 62 dargestellt.

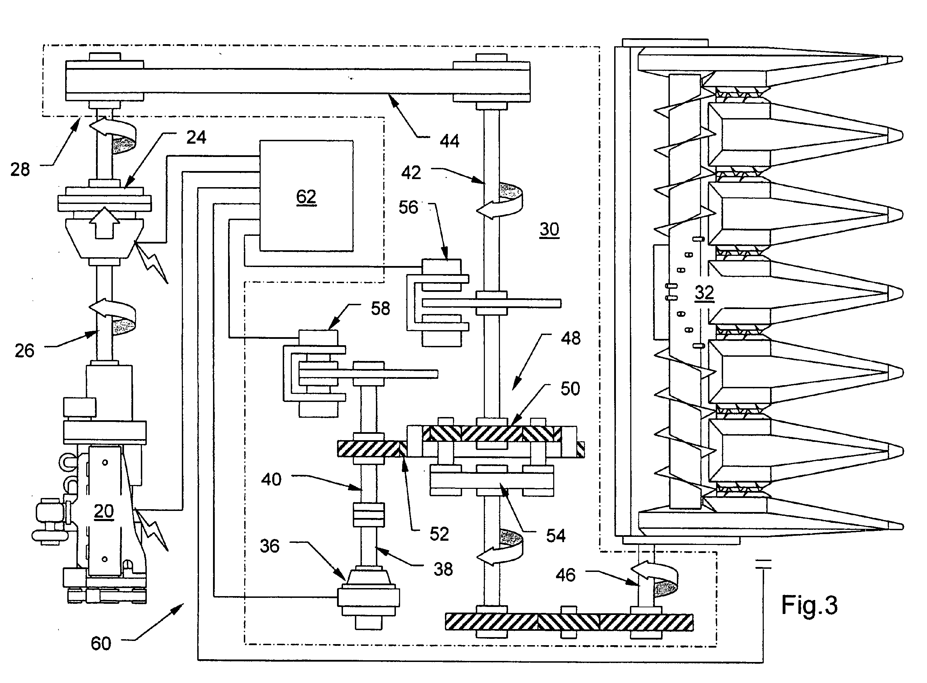

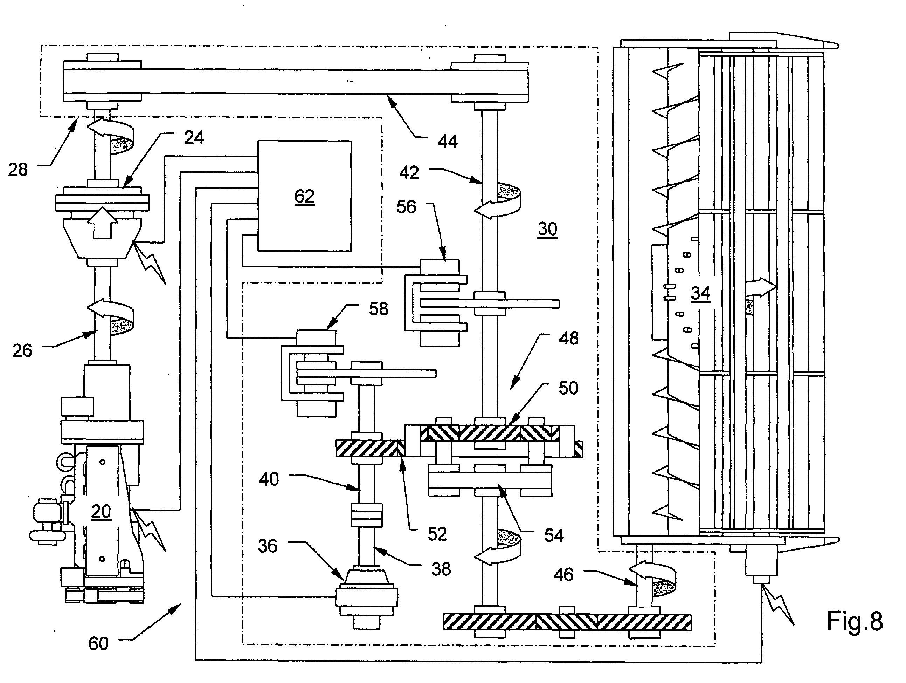

Die Figuren 3 und 8 zeigen das Getriebe 30 während des normalen Betriebs des Erntevorsatzes 14 mit fester Geschwindigkeit. Die Figur 3 zeigt das Getriebe 30 mit einem Maispflücker 32 und die Figur 8 zeigt das Getriebe 30 mit einem Schneidwerk 34. Als Reaktion auf eine Bedieneranweisung für diese Betriebsart veranlasst der Controller 62 die elektrisch betätigbare Kupplung 24 zu schließen, wodurch die erste Ausgangswelle 26 über den Riemenantrieb 44 mit der ersten Eingangswelle 42 verbunden wird. Die erste Bremse 56 bleibt im normalen Betrieb außer Eingriff und erlaubt es der ersten Eingangswelle 42 zu drehen. Die zweite Bremse 58 bleibt im normalen Betrieb im Eingriff und hindert die zweite Eingangswelle 40 und das Ringrad 52 des Planetengetriebes 48 am Drehen. Bei stationär gehaltenem Ringrad 52 wird die Drehung der ersten Eingangswelle 42 und des Sonnenrads 50 somit proportional auf den Planetenradzusammenbau 54 und die Erntevorsatzausgangswelle 46 übersetzt. Die resultierende Drehung der Erntevorsatzausgangswelle 46 entspricht dem normalen Betrieb des Erntevorsatzes 14 mit fester Geschwindigkeit.

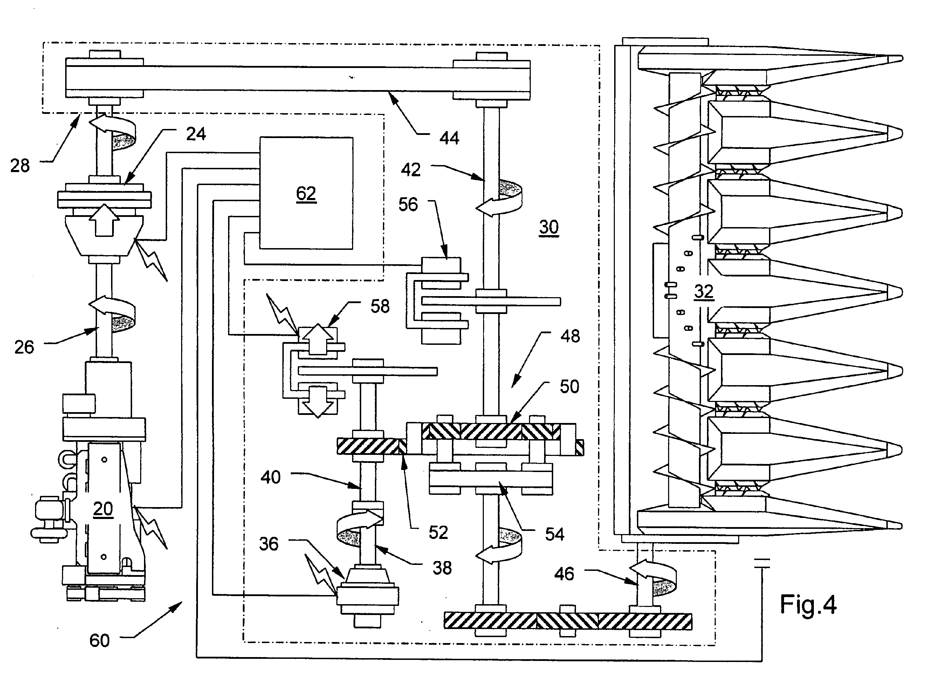

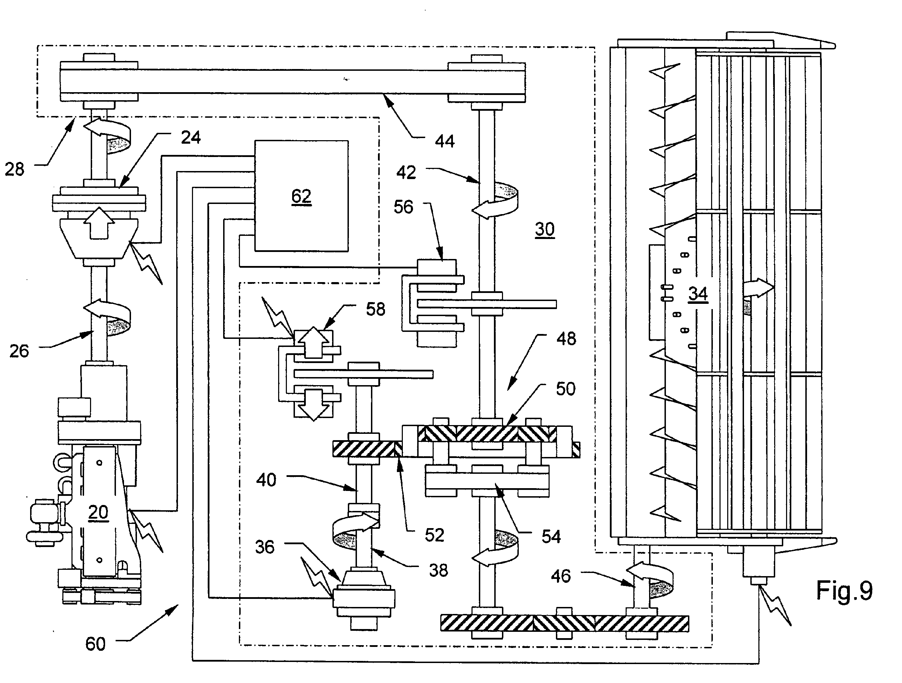

Die Figuren 4 und 9 zeigen das Getriebe 30 während des Betriebs des Erntevorsatzes 14 mit hoher, veränderbarer Geschwindigkeit. Die Figur 4 zeigt das Getriebe 30 mit einem Maispflücker 32 und die Figur 9 zeigt das Getriebe 30 mit einem Schneidwerk 34. Als Reaktion auf eine Bedieneranweisung für diese Betriebsart veranlasst der Controller 62 die elektrisch betätigbare Kupplung 24 zu schließen, oder er fährt damit fort, wodurch die erste Ausgangswelle 26 über den Riemenantrieb 44 mit der ersten Eingangswelle 42 verbunden wird. Die erste Bremse 56 bleibt im normalen Betrieb außer Eingriff und erlaubt es der ersten Eingangswelle 42 zu drehen. Hier veranlasst der Controller 62 die zweite Bremse 58 außer Eingriff zu gehen, was es der zweiten Eingangswelle 40 und dem Ringrad 52 des Planetengetriebes 48 ermöglicht, zu drehen. Der Controller 62 ist eingerichtet, weiterhin den zweiten Motor 36 anzuweisen, die zweite Ausgangswelle 38 entweder vorwärts oder rückwärts zu drehen, abhängig von einer Anweisung des Bedieners nach höherer oder niedrigerer Geschwindigkeit des Erntevorsatzes 14 in Verhältnis zu dem normalen Betrieb mit fester Geschwindigkeit. Typischerweise wird der Controller 62 in Abwesenheit gegenteiliger Anweisungen des Bedieners den zweiten Motor 36 anweisen, in dieser Betriebsart die zweite Ausgangswelle 38 stationär zu halten. Während die zweite Ausgangswelle 40 und das Ringrad 52 stationär gehalten werden, wird die Drehung der ersten Eingangswelle 42 und des Sonnenrads 50 somit auf den Planetenradzusammenbau 54 und die Erntevorsatzausgangswelle 46 proportional übersetzt. Die resultierende Drehung der Erntevorsatzausgangswelle 46 entspricht daher dem normalen Betrieb des Erntevorsatzes 14 mit fester Geschwindigkeit.

Falls der Bediener weiterhin einen Anstieg der Betriebsgeschwindigkeit des Erntevorsatzes 14 über den normalen Betrieb mit fester Geschwindigkeit hinaus um einen gewünschten Betrag anweist, veranlasst der Controller 62 den zweiten Motor 36, die zweite Ausgangswelle 38 mit einer zur Bedienereingabe proportionalen Geschwindigkeit vorwärts zu drehen. Die Drehung der zweiten Eingangswelle 40 und des Ringrades 52 wird daher dem Planetenradzusammenbau 54 und der Erntevorsatzausgangswelle 46 proportional hinzuaddiert. Die sich ergebende Drehgeschwindigkeit der Erntevorsatzausgangswelle 46 ist daher größer als beim normalen Betrieb des Erntevorsatzes 14 mit fester Geschwindigkeit. Wenn der Bediener umgekehrt verlangt, dass die Betriebsgeschwindigkeit des Erntevorsatzes 14 unter die beim normalen Betrieb mit fester Geschwindigkeit geltende Geschwindigkeit absinkt, weist der Controller 62 den zweiten Motor 36 an, die zweite Ausgangswelle 38 mit einer zur Bedienereingabe proportionalen Geschwindigkeit rückwärts zu drehen. In diesem Fall wird die Drehung der zweiten Eingangswelle 40 und des Ringrades 52 von dem Planetenradzusammenbau 54 und der Erntevorsatzausgangswelle 46 proportional subtrahiert, und die sich ergebende Drehgeschwindigkeit der Erntevorsatzausgangswelle 46 ist kleiner als die beim normalen Betrieb mit fester Geschwindigkeit. Obwohl sie hier als manuell durch die Eingaben des Bedieners gesteuert dargestellt wird, kann die Betriebsgeschwindigkeit des vom Getriebe 30 angetriebenen Erntevorsatzes 14 automatisch gesteuert werden, beispielsweise in Reaktion auf eine veränderte Vortriebsgeschwindigkeit und/oder sich verändernde Ernteguteigenschaften.

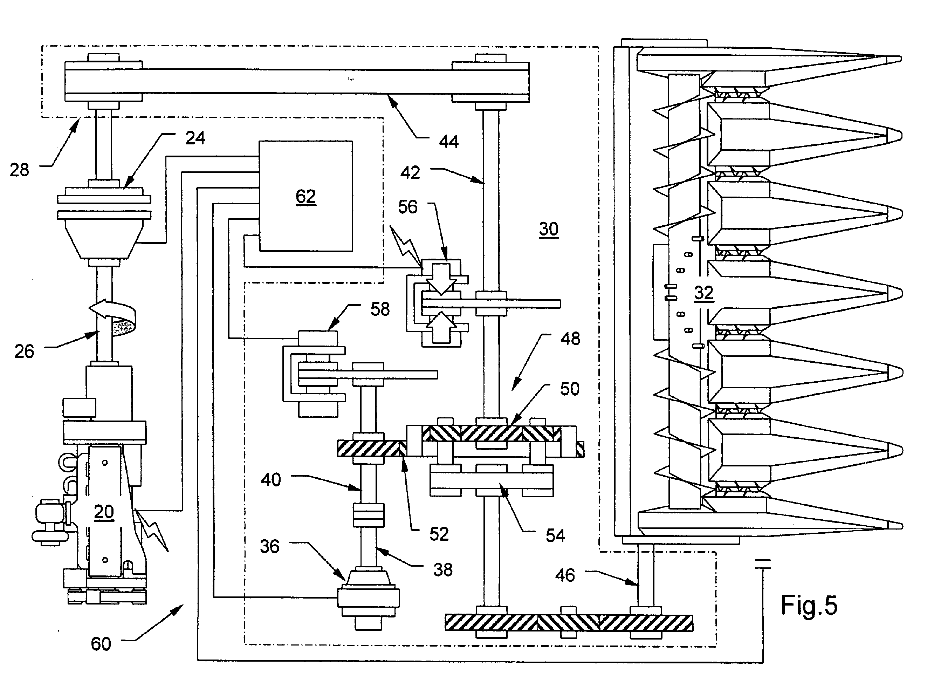

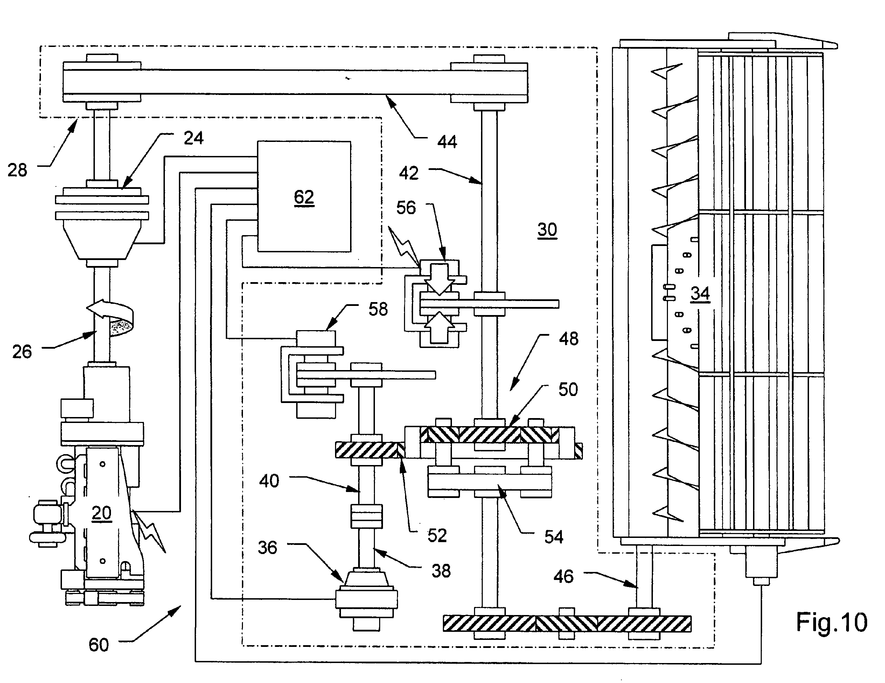

Die Figuren 5 und 10 zeigen das Getriebe 30 während eines schnellen Anhaltens des Erntevorsatzes 14. Die Figur 5 zeigt das Getriebe 30 mit einem Maispflücker 32 und die Figur 10 zeigt das Getriebe 30 mit einem Schneidwerk 34. Als Reaktion auf eine Bedieneranweisung für diese Betriebsart hört der Controller 62 damit auf, ein Schließen der elektrisch betätigbaren Kupplung 24 anzuweisen, so dass es der elektrisch betätigbaren Kupplung erlaubt wird, in ihre getrennte Ruheposition zurückzugehen, wobei die erste Ausgangswelle 26 vom Riemenantrieb 44 und der ersten Eingangswelle 42 getrennt wird. Die zweite Bremse 58 bleibt in ihrer normalen Ruheposition, oder geht dahin zurück, was die zweite Eingangswelle 40 und das Ringrad 52 des Planetengetriebes 48 am Drehen hindert. Hier veranlasst der Controller 62 die erste Bremse 56 jedoch einzugreifen, was die erste Eingangswelle 42 und das Sonnenrad 50 des Planetengetriebes 48 schnell anhält. Da die Drehung sowohl des Ringrads 52 als auch des Sonnenrads 50 des Planetengetriebes 48 zu einem schnellen Anhalten gebracht werden, wird auch die Drehung des damit im Eingriff stehenden Planetenradzusammenbaus 54 und der Erntevorsatzausgangswelle 46 zum Halten gebracht, was ein schnelles Herunterfahren der mechanisch angetriebenen Funktionen des Erntevorsatzes 14 zur Folge hat.

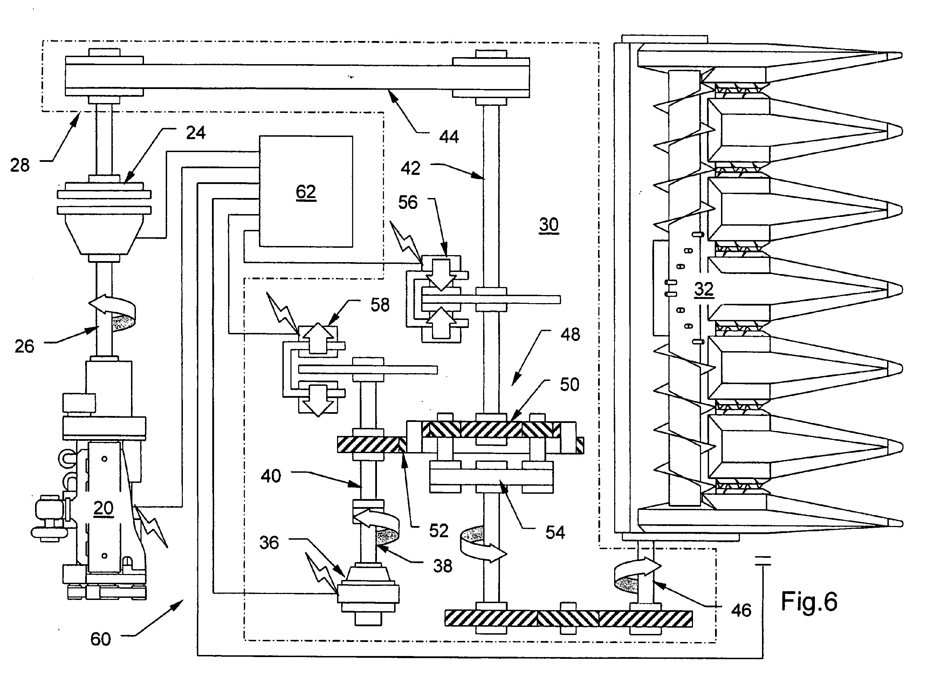

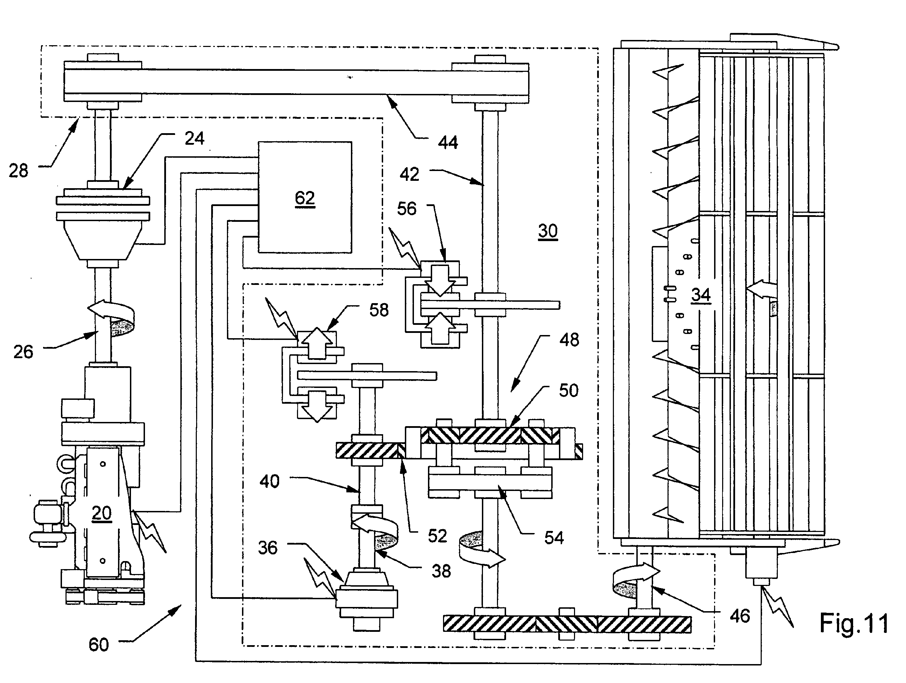

Die Figuren 6 und 11 zeigen das Getriebe 30 während des Betriebs des Erntevorsatzes 14 mit niedriger, veränderbarer Geschwindigkeit. Die Figur 6 zeigt das Getriebe 30 mit einem Maispflücker 32 und die Figur 11 zeigt das Getriebe 30 mit einem Schneidwerk 34. Als Reaktion auf eine Bedieneranweisung für diese Betriebsart hört der Controller 62 mit der Anweisung an die elektrisch betätigbare Kupplung 24 zu schließen auf, so dass es der elektrisch betätigbaren Kupplung 24 erlaubt wird, in ihre getrennte Ruheposition zurück zu gehen oder dort zu verbleiben, wobei die erste Ausgangswelle 26 vom Riemenantrieb 44 und der ersten Eingangswelle 42 getrennt wird. Der Controller 62 veranlasst die erste Bremse 56 in Eingriff zu gehen, oder er fährt damit fort, was die erste Eingangswelle 42 und das Sonnenrad 50 des Planetengetriebes 48 am Drehen hindert. Der Controller 62 veranlasst die zweite Bremse 58 außer Eingriff zu gehen, was es der zweiten Eingangswelle 40 und dem Ringrad 52 des Planetengetriebes 48 ermöglicht, zu drehen. Außerdem ist der Controller 62 eingerichtet, den zweiten Motor 36 anzuweisen, die zweite Ausgangswelle 38 entweder vorwärts oder rückwärts zu drehen, abhängig von einer Anweisung des Bedieners nach einem langsamen Vorwärts- oder Rückwärtsbetrieb des Erntevorsatzes 14.

Falls der Bediener einen Vorwärtsbetrieb des Erntevorsatzes 14 mit einer gewünschten niedrigen Geschwindigkeit veranlasst, weist der Controller 62 den zweiten Motor 36 an, die zweite Ausgangswelle 38 mit einer zur Bedienereingabe proportionalen Geschwindigkeit vorwärts zu drehen. Bei stationär gehaltener erster Eingangswelle 42 und stationärem Sonnenrad 50 wird die Drehung der zweiten Eingangswelle 40 und des Ringrades 52 proportional auf den Planetenradzusammenbau 54 und die Erntevorsatzausgangswelle 46 übersetzt. Die sich ergebende Drehgeschwindigkeit der Erntevorsatzausgangswelle 46 entspricht einem gewünschten Vorwärtsbetrieb des Erntevorsatzes 14 mit niedriger Geschwindigkeit. Wenn der Bediener umgekehrt einen reversierenden Betrieb des Erntevorsatzes 14 mit einer gewünschten, niedrigen Geschwindigkeit verlangt, weist der Controller 62 den zweiten Motor 36 an, die zweite Ausgangswelle 38 mit einer zur Bedienereingabe proportionalen Geschwindigkeit rückwärts zu drehen. Wiederum wird die Drehung der zweiten Eingangswelle 40 und des Ringrades 52 bei stationär gehaltener erster Eingangswelle 42 und stationär gehaltenem Sonnenrad 50 proportional auf den Planetenradzusammenbau 54 und die Erntevorsatzausgangswelle 46 übersetzt. Die sich ergebende Drehung der Erntevorsatzausgangswelle 46 entspricht einem gewünschten Reversierbetrieb des Erntevorsatzes 14 mit niedriger Geschwindigkeit.

## Patentansprüche

1. Antriebsanordnung zum Antrieb eines Erntevorsatzes (14) einer Erntemaschine, mit:
einem ersten Motor (20) mit einer in Drehung versetzbaren ersten Ausgangswelle (26), die mit einer drehbaren ersten Eingangswelle (42) verbindbar ist,
einer ersten Bremse (56), die mit der ersten Eingangswelle (42) gekoppelt ist,
einem zweiten, mit veränderbarer Geschwindigkeit vorwärts und rückwärts antreibbaren Motor (36), der mit einer zweiten Ausgangswelle (38) versehen ist, die mit einer zweiten Eingangswelle (40) verbunden ist,
einer Erntevorsatzausgangswelle (46) zum Antrieb eines Erntevorsatzes (14) und
einem Planetengetriebe (48), das als Elemente ein Sonnenrad (50), ein Ringrad (52) und einen Planetenradzusammenbau (54) umfasst, der Planetenräder aufweist, die mit dem Sonnenrad (50) und dem Ringrad (52) im Eingriff stehen,
wobei die erste Eingangswelle (42) mit einem der Elemente des Planetengetriebes (48) verbunden ist, die zweite Eingangswelle (40) mit einem anderen der Elemente des Planetengetriebes (48) verbunden ist, und die Erntevorsatzausgangswelle (46) mit dem verbleibenden Element des Planetengetriebes (48) verbunden ist, **dadurch gekennzeichnet, dass** die zweite Eingangswelle (40) mit einer zweiten Bremse (58) verbunden ist, mit der die zweite Eingangswelle (40) wahlweise anhaltbar ist.

2. Antriebsanordnung nach Anspruch 1, **dadurch gekennzeichnet, dass** eine schaltbare Kupplung (24) zwischen der ersten Ausgangswelle (26) und der ersten Eingangswelle (42) angeordnet ist.

3. Antriebsanordnung nach Anspruch 2, **dadurch gekennzeichnet, dass** eine erste Bremse (56) mit der ersten Eingangswelle (42) verbunden ist, mit der die erste Eingangswelle (42) wahlweise anhaltbar ist.

4. Antriebsanordnung nach einem der vorhergehenden Ansprüche, **dadurch gekennzeichnet, dass** ein Steuerschaltkreis (60) vorhanden ist, der eingerichtet ist, Anweisungen von einem Bediener zu empfangen und mit der zweiten Bremse (58) und dem zweiten Motor (36) und vorzugsweise mit der Kupplung (24) und/oder der ersten Bremse (56) in Wirkverbindung steht.

5. Antriebsanordnung nach Anspruch 4, **dadurch gekennzeichnet, dass** der Steuerschaltkreis (60) betreibbar ist, die Kupplung (24) zu veranlassen, die erste Ausgangswelle (26) mit der ersten Eingangswelle (42) zu verbinden und den zweiten Motor (36) zu veranlassen, sich mit einer veränderbaren Vorwärts- oder Rückwärtsgeschwindigkeit der zweiten Ausgangswelle (38) zu drehen.

6. Antriebsanordnung nach Anspruch 4 oder 5, **dadurch gekennzeichnet, dass** der Steuerschaltkreis (60) betreibbar ist, die Kupplung (24) zu veranlassen, die erste Ausgangswelle (26) von der ersten Eingangswelle (42) zu trennen und die erste Bremse (56) zu aktivieren und den zweiten Motor (36) zu veranlassen, sich mit einer veränderbaren Vorwärts- oder Rückwärtsgeschwindigkeit der zweiten Ausgangswelle (38) zu drehen.

7. Antriebsanordnung nach einem der Ansprüche 4 bis 6, **dadurch gekennzeichnet, dass** der Steuerschaltkreis (60) betreibbar ist, die Kupplung (24) zu veranlassen, die erste Ausgangswelle (26) von der ersten Eingangswelle (42) zu trennen und die erste Bremse (56) und die zweite Bremse (58) zu aktivieren und den zweiten Motor (36) anzuhalten.

8. Antriebsanordnung nach einem der Ansprüche 4 bis 7, **dadurch gekennzeichnet, dass** der Steuerschaltkreis (60) betreibbar ist, die Kupplung (24) zu veranlassen, die erste Ausgangswelle (26) mit der ersten Eingangswelle (42) zu verbinden und die zweite Bremse (58) zu aktivieren und den zweiten Motor (36) anzuhalten.

9. Antriebsanordnung nach Anspruch 8, **dadurch gekennzeichnet, dass** die Antriebsgeschwindigkeit der Erntevorsatzantriebswelle (46) bei geschlossener Kupplung (24) und aktivierter zweiter Bremse (58) einer normalen Betriebsgeschwindigkeit entspricht.

10. Antriebsanordnung nach einem der vorhergehenden Ansprüche, **dadurch gekennzeichnet, dass** die erste Eingangswelle (42) mit dem Sonnenrad (50) verbunden ist, die zweite Eingangswelle (40) mit dem Ringrad (52) verbunden ist, und die Erntevorsatzausgangswelle (46) mit dem einen Planetenradzusammenbau (54) verbunden ist.

11. Erntemaschine, insbesondere Mähdrescher, mit einer Antriebsanordnung nach einem der vorhergehenden Ansprüche.

## Claims

1. A drive arrangement for driving a header (14) of a harvesting machine, comprising:
a first motor (20) having a rotatable first output shaft (26) which is connectable to a rotatable first input shaft (42),
a second motor (36) that can be driven forwardly and
rearwardly with variable speed, the second motor (36) being provided with a second output shaft (38) connected to a second input shaft (40),
a header output shaft (46) for driving a header (14) and
a planetary gear-train (48), having as elements a sun gear (50), a ring gear (52) and a planetary gear assembly (54) having planetary gears meshing with the sun gear (50) and the ring gear (52),
wherein the first input shaft (42) is connected to one of the elements of the planetary gear-train (48), the second input shaft (40) is connected to another one of the elements of the planetary gear-train (48), and the header drive shaft (46) is connected to the remaining element of the planetary gear-train (48),
**characterized in that** the second input shaft (40) is connected to a second brake (58) with which the second drive shaft (40) can be selectively stopped.

2. A drive arrangement according to claim 1, **characterized in that** a switchable (24) is provided betweeen the first output shaft (26) and the first input shaft (42).

3. A drive arrangement according to claim 2, **characterized in that** a first brake (56) is connected to the first drive shaft (42) with which the first drive shaft (42) can be selectively stopped.

4. A drive arrangement according to one of the preceding claims, **characterized in that** a control circuit (60) is provided that is arranged to receive commands from an operator and is in acting connection with the second brake (58) and the second motor (36) and preferably with the clutch (24) and/or the first brake (56).

5. A drive arrangement according to claim 4, **characterized in that** the control circuit (60) is operable to command the clutch (24) to connect the first output shaft (26) to the first input shaft (42) and to command the second motor (36) to rotate with a variable forward or rearward speed of the second output shaft (38).

6. A drive arrangement according to claim 4 or 5, **characterized in that** the control circuit (60) is operable to command the clutch (24) to separate the first output shaft (26) from the first input shaft (42) and to activate the first brake (56) and to command the second motor (36) to rotate with a variable forward or rearward speed of the second output shaft (38).

7. A drive arrangement according to one of claims 4 to 6, **characterized in that** the control circuit (60) is operable to command and to activate the first brake (56) and the second brake (58) and to stop the second motor (36).

8. A drive arrangement according to one of claims 4 to 7, **characterized in that** the control circuit (60) is operable to command the clutch (24) to connect the first output shaft (26) to the first input shaft (42) and to activate the second brake (58) and to stop the second motor (36).

9. A drive arrangement according to claim 9, **characterized in that** the drive speed of the header drive shaft (46) corresponds to a normal work speed when the clutch (24) is closed and the second brake (58) is activated.

10. A drive arrangement according to one of the preceding claims, **characterized in that** the first input shaft (42) is connected to the sun gear (50), the second input shaft (40) is connected to the ring gear (52), and the header output shaft (46) is connected to the planetary gear assembly (54).

11. A harvesting machine, especially a combine, comprising a drive arrangement according to one of the preceding claims.

## Revendications

1. Dispositif d'entraînement pour entraîner la tête de récolte (14) d'une machine de récolte, comprenant:
un premier moteur (20) avec un premier arbre de sortie (26) pouvant être mis en rotation, qui peut être relié à un premier arbre d'entrée rotatif (42),
un premier frein (56), qui est couplé au premier arbre d'entrée (42),
un deuxième moteur (36), pouvant être entraîné en marche avant et en marche arrière avec une vitesse variable, qui est pourvu d'un deuxième arbre de sortie (38) relié à un deuxième arbre d'entrée (40),
un arbre de sortie de tête de récolte (46) pour l'entraînement d'une tête de sortie (14), et
un engrenage planétaire (48), qui comprend comme éléments une roue solaire (50), une roue annulaire (52) et un ensemble de roues planétaires (54), comprenant des roues planétaires qui engrènent avec la roue solaire (50) et la roue annulaire (52),
dans lequel le premier arbre d'entrée (42) est relié à un des éléments de l'engrenage planétaire (48), le deuxième arbre d'entrée (40) est relié à un autre des éléments de l'engrenage planétaire (48), et l'arbre de sortie de tête de récolte (46) est relié à l'élément restant de l'engrenage planétaire (48),
**caractérisé en ce que** le deuxième arbre d'entrée (40) est relié à un deuxième frein (58), avec lequel le deuxième arbre d'entrée (40) peut être arrêté au choix.

2. Dispositif d'entraînement selon la revendication 1, **caractérisé en ce qu'**un embrayage commutable (24) est disposé entre le premier arbre de sortie (26) et le premier arbre d'entrée (42).

3. Dispositif d'entraînement selon la revendication 2, **caractérisé en ce qu'**un premier frein (56) est relié au premier arbre d'entrée (42), avec lequel le premier arbre d'entrée (42) peut être arrêté au choix.

4. Dispositif d'entraînement selon l'une quelconque des revendications précédentes, **caractérisé en ce qu'**il comporte un circuit de commande (60), qui est conçu pour recevoir des instructions d'un opérateur et qui est en liaison active avec le deuxième frein (58) et le deuxième moteur (36) et de préférence avec l'embrayage (24) et/ou le premier frein (56).

5. Dispositif d'entraînement selon la revendication 4, **caractérisé en ce que** le circuit de commande (60) peut être activé pour commander l'embrayage (24) afin de relier le premier arbre de sortie (26) au premier arbre d'entrée (42), et pour commander le deuxième moteur (36) afin de le faire tourner avec une vitesse variable en marche avant ou en marche arrière du deuxième arbre de sortie (38).

6. Dispositif d'entraînement selon la revendication 4 ou 5, **caractérisé en ce que** le circuit de commande (60) peut être activé pour commander l'embrayage (24) afin de séparer le premier arbre de sortie (26) du premier arbre d'entrée (42) et d'activer le premier frein (56), et pour commander le deuxième moteur (36) afin de le faire tourner avec une vitesse variable en marche avant ou en marche arrière du deuxième arbre de sortie (38).

7. Dispositif d'entraînement selon l'une quelconque des revendications 4 à 6, **caractérisé en ce que** le circuit de commande (60) peut être activé pour commander l'embrayage (24) afin de séparer le premier arbre de sortie (26) du premier arbre d'entrée (42) et d'activer le premier frein (56) et le deuxième frein (58) et d'arrêter le deuxième moteur (36).

8. Dispositif d'entraînement selon l'une quelconque des revendications 4 à 7, **caractérisé en ce que** le circuit de commande (60) peut être activé pour commander l'embrayage (24) afin de relier le premier arbre de sortie (26) au premier arbre d'entrée (42) et d'activer le deuxième frein (58) et d'arrêter le deuxième moteur (36).

9. Dispositif d'entraînement selon la revendication 8, **caractérisé en ce que** la vitesse d'entraînement de l'arbre de sortie de tête de récolte (46) correspond à une vitesse de fonctionnement normale lorsque l'embrayage (24) est engagé et que le deuxième frein (58) est activé.

10. Dispositif d'entraînement selon l'une quelconque des revendications précédentes, **caractérisé en ce que** le premier arbre d'entrée (42) est relié à la roue solaire (50), le deuxième arbre d'entrée (40) est relié à la roue annulaire 1 (52) et l'arbre de sortie de tête de récolte (46) est relié à l'ensemble de roues planétaires (54).

11. Machine de récolte, en particulier moissonneuse-batteuse, avec un dispositif d'entraînement selon l'une quelconque des revendications précédentes.
